# EUROPÄISCHE PATENTSCHRIFT

(11) **EP 2 654 935 B1**
(45) Veröffentlichungstag und Bekanntmachung des Hinweises auf die Patenterteilung: **08.04.2015**
(21) Anmeldenummer: 11802888.5
(22) Anmeldetag: 09.12.2011
(51) Int. Cl.: B01F 7/00, B01F 15/00, F16C 35/02, B29B 7/40

(54) **DYNAMISCHER MISCHER**
DYNAMIC MIXER
MÉLANGEUR DYNAMIQUE

(30) Priorität: 22.12.2010 DE 102010055860; 08.02.2011 DE 102011010517
(43) Veröffentlichungstag der Anmeldung: 30.10.2013
(73) Patentinhaber: Oerlikon Textile GmbH & Co. KG, 42897 Remscheid (DE)
(72) Erfinder: HELBING, Ulrich, 51399 Burscheid (DE); WITZLER, Dietrich, 41569 Rommerskirchen (DE); JUNGBLUTH, Heike, 41569 Rommerskirchen (DE)
(74) Vertreter: Neumann, Ditmar
(86) Internationale Anmeldenummer: PCT/EP2011/072270
(87) Internationale Veröffentlichungsnummer: WO 2012/084546

(56) Entgegenhaltungen:
- US-A- 2 977 098
- US-A- 3 063 726
- DICKMEISS F: "HIGH-EFFICIENCY DYNAMIC CAVITY MIXERS FOR POLYMER PROCESSING", CHEMICAL FIBERS INTERNATIONAL, IBP PRESS, FRANKFURT AM MAIN, DE, Bd. 57, Nr. 1/02, 1. März 2007 (2007-03-01), Seiten 45-48, XP001541083, ISSN: 0340-3343 in der Anmeldung erwähnt

## Beschreibung

Die Erfindung betrifft einen dynamischen Mischer zum Vermengen von fließfähigen Medien gemäß dem Oberbegriff des Anspruchs 1.

Bei der Polymerverarbeitung ist es bekannt, dass die Eigenschaften der Polymere durch Zusätze in einem weiten Bereich beeinflusst werden. Hierbei ist es üblich, die Zusätze mit dem Polymer zu vermengen. Als Zusätze können hierbei Additive, Farben, Stabilisatoren, Gleitmittel oder andere Polymere in das Grundpolymer eingemengt werden. Es ist jedoch auch möglich, verschiedene Zusatzmittel vor der Einspeisung wie beispielsweise Farben miteinander zu vermengen. Hierzu werden üblicherweise dynamische Mischer eingesetzt, bei welchem die Medien innerhalb einer Mischkammer durch eine Mischwelle vermengt werden.

Derartige Mischer sind beispielsweise in dem Fachartikel "High-Efficiency-Dynamic Cavity Mixers for Polymer Processing" F. Dickmeis, Chemical Fibre International, Vol. 57, 2007 Seite 45 ff, beschrieben. Hieraus ist ein dynamischer Mischer bekannt, der aus einem mehrteiligen Gehäuse besteht, in welchem eine Mischkammer mit einer Mischwelle angeordnet ist. Die Mischwelle weist hierbei einen in die Mischkammer hineinragenden Mischabschnitt, einen Lagerabschnitt und einen aus dem Gehäuse herausragenden Antriebsabschnitt zu Ankupplung an einen Antrieb auf. Der Lagerabschnitt der Mischwelle dient im Gehäuse zumindest zur Aufnahme eines Radiallagers, das vorzugsweise als ein Gleitlager ausgebildet ist.

Weiterhin ist aus der US 2 977 098 A ebenfalls ein Mischer gemäß dem Oberbegriff des Anspruchs 1 zum Vermengen von fließfähigen Medien mit einer Mischkammer bekannt. Dieser Mischer weist eine Mischwelle auf die unter anderem durch eine Lagerung in einem Gehäuse geführt wird. Weiterhin weist das Gehäuse des Mischers eine Dichtung für einen Spalt zwischen der Mischwelle und dem Gehäuse auf.

Zudem ist auch aus der US 3 063 726 A ein Mischer zum Vermengen von fließfähigen Medien mit einer Mischkammer bekannt. Bei diesem Mischer weist ein Gehäuse ebenfalls Dichtungen und Lagerungen mit entsprechenden Bohrungen im Gehäuse auf.

Bei derartigen dynamischen Mischern stellen sich im Übergangsbereich zwischen dem Lagerabschnitt und dem Antriebsabschnitt der Mischwelle im Gehäuse mehr oder weniger ausgeprägt Toträume ein, in denen Ansammlungen der zu vermengenden Medien entstehen. Derartige Ansammlungen lassen sich zwar vorteilhaft zur Schmierung des Lagerabschnittes der Mischwelle nutzen, jedoch mit dem Nachteil, dass beispielsweise nach einem Farbwechsel ungewünschte Verunreinigungen innerhalb der Mischkammer entstehen.

Es ist somit Aufgabe der Erfindung, einen dynamischen Mischer zum Vermengen von fließfähigen Medien der gattungsgemäßen Art bereitzustellen, bei welchem das Gehäuse ohne wesentliche Toträume am Umfang der Mischwelle ausgebildet sind, die unmittelbar mit der Mischkammer verbunden sind.

Diese Aufgabe wird erfindungsgemäß dadurch gelöst, dass das Gehäuse zur Aufnahme des Antriebsabschnittes der Mischwelle eine Dichtungsbohrung und zur Lagerung des Lagerabschnitts der Mischwelle eine Lagerbohrung aufweist und dass die Dichtungsbohrung zur Aufnahme eines Dichtungsmittels im Durchmesser größer ausgebildet ist als die Lagerbohrung, wobei der Lagerbohrung ein Schmierkanal zugeordnet ist, der in die Lagerbohrung mündet und mit einem der Einlässe verbunden ist.

Vorteilhafte Weiterbildungen der Erfindung sind durch die Merkmale und Merkmalskombinationen der Unteransprüche definiert.

Die Erfindung besitzt den besonderen Vorteil, dass sich innerhalb des Gehäuses minimale Übergangszonen zwischen dem Lagerabschnitt der Mischwelle und dem Antriebsabschnitt der Mischwelle ergeben. So können die Lagerbohrung zur Lagerung der Mischwelle und die Dichtungsbohrung zur Abdichtung der Mischwelle unmittelbar innerhalb des Gehäuses aneinandergrenzend ausgebildet werden, wobei durch die größere Dichtungsbohrung eine Aufnahme des Dichtungsmittels bis hin zur Lagerbohrung möglich ist.

Zur Gewährleistung, dass die Mischwelle innerhalb der Lagerbohrung möglichst mit gleichbleibenden Reibverhältnissen umlaufen kann, ist der Lagerbohrung eine Schmierbohrung zugeordnet, die in die Lagerbohrung mündet und mit einem der Einlässe verbunden ist. Damit lässt sich ein dem Mischer zugeführte Medium unmittelbar der Lagerbohrund und damit dem Gleitlager zuführten. Durch die an der Mischkammer wirkende Druckdifferenz lässt sich somit auch an dem Gleitlager ein kontinuierlicher Schmierstrom in Richtung zur Mischkammer erzeugen.

Um die Montierbarkeit der Einzelteile zu verbessern und gleichzeitig die Übergangszonen zwischen der Lagerbohrung und der Dichtungsbohrung zu minimieren, ist gemäß einer besonders vorteilhaften Weiterbildung der Erfindung zwischen der Lagerbohrung und der Dichtungsbohrung eine Trennfuge im Gehäuse ausgebildet.

Gemäß einer vorteilhaften Weiterbildung der Erfindung sind die Lagerbohrung in einem separaten Lagergehäuse und die Dichtungsbohrung in einem separaten Dichtungsgehäuse ausgebildet, wobei die Gehäuseteile über die Trennfuge druckdicht miteinander verbunden sind. Damit ist eine auf die jeweilige Funktion angepasste Gestaltung und Fertigung der Gehäuseteile sowie der Bohrungen möglich.

Es hat sich gezeigt, dass beim Vermischen von abrasiven Medien ein unmittelbares Zusammenwirken zwischen dem Dichtungsmittel und dem Medium, das in der Lagerbohrung zur Gleitlagerung der Mischwelle geführt ist, möglichst vermieden werden sollte, um keinen erhöhten Verschleiß des Dichtungsmittels zu erhalten. Insoweit ist die Weiterbildung der Erfindung bevorzugt ausgeführt, bei welchem dem Dichtungsmittel am Umfang der Mischwelle ein Stützring zugeordnet ist, durch welchen sich das Dichtungsmittel gegenüber der Lagerbohrung abstützt. Damit wird zusätzlich vermieden, dass das Dichtungsmittel durch eine Spaltextrusion in einen Lagerspalt zwischen dem Gehäuse und der Mischwelle gelangt.

Hierbei ist das Dichtungsmittel bevorzugt durch eine Stopfbuchspackung gebildet, der eine Druckfeder zugeordnet ist. Die Druckfeder lässt sich beispielsweise über einen Schraubadapter an dem Gehäuse derart halten, dass die Stoffbuchspackung durch die Druckfeder belastet an dem Stützring gehalten ist. Damit lässt sich einerseits eine gleichmäßige Reibwirkung am Umfang der Mischwelle erzeugen und andererseits eine hohe Dichtigkeit erreichen.

In Abhängigkeit von der Ausgestaltung der Mischwelle im Bereich des Mischabschnittes ist es besonders von Vorteil, wenn die Mischwelle im Wesentlichen ohne Axialbewegung innerhalb der Mischkammer geführt ist. Hierzu ist die Weiterbildung der Erfindung vorgesehen, bei welcher der Antriebsabschnitt der Mischwelle außerhalb der Dichtungsbohrung ein Axiallager zugeordnet ist, das durch ein mit dem Dichtgehäuse verbundenes Adaptergehäuse gehalten ist. Damit lassen sich sowohl innere als auch äußere Axialkräfte an der Mischwelle aufnehmen. Zudem werden dadurch auch die durch eine Schwerkraft an der Mischwelle erzeugten Bewegungen bei einer vertikalen Einbausituation verhindert.

Hierbei hat sich gezeigt, dass eine gegenüber dem Axiallager zusätzliche Abdichtung vorteilhaft ist, um jegliche über die Mischwelle nach außen geführten Leckagen zu verhindern. So ist vorgesehen, am Umfang des Antriebsabschnittes der Mischwelle zwischen dem Axiallager und dem Dichtungsmittel ein Wellendichtring und eine Ringkammer auszubilden, wobei die Ringkammer mit einem Sperrmedium füllbar ist. Damit wird eine absolute Dichtung nach außen hin realisiert.

Zur intensiven Durchmischung der Medien innerhalb der Mischkammer wird bevorzugt ein Nutensystem eingesetzt, wobei Umfangsnuten am Umfang der Mischwelle und Gehäusenuten üblicherweise zusammenwirken. Zur Ausbildung derartiger Gehäusenuten ist die Weiterbildung der Erfindung vorgesehen, bei welcher die Mischkammer durch mehrere Gehäuseringe gebildet ist, die druckdicht in dem Gehäuse gehalten sind und die gemeinsam mit dem Mischabschnitt in der Mischwelle ein Nutensystem innerhalb der Mischkammer bilden.

Die Gehäuseringe werden bevorzugt zwischen einem Auslassgehäuse und dem Lagergehäuse angeordnet, wobei sich die Mischkammer von Lagergehäuse bis hin zum Auslassgehäuse erstreckt.

Die Einlässe zur Zuführung der Medien werden bevorzugt unmittelbar an dem Lagergehäuse ausgebildet, so dass der Auslass an dem Ende der Mischkammer am Auslassgehäuse integriert ist.

Der erfindungsgemäße dynamische Mischer wird bevorzugt zur Polymerverarbeitung verwendet. Grundsätzlich besteht dabei die Möglichkeit, dass ein Polymer und ein Zusatzstoff oder nur Zusatzstoffe wie beispielsweise flüssige Farben miteinander vermengt werden.

Der erfindungsgemäße dynamische Mischer wird nachfolgend anhand einiger Ausführungsbeispiele unter Bezug der beigefügten Figuren näher erläutert.

Es stellen dar:
- Fig. 1: schematisch eine Querschnittansicht eines ersten Ausführungsbeispiels des erfindungsgemäßen Mischers
- Fig. 2: schematisch eine Querschnittansicht eines weiteren Ausführungsbeispiels des erfindungsgemäßen Mischers
- Fig. 3: schematisch eine Querschnittansicht eines weiteren Ausführungsbeispiels des erfindungsgemäßen Mischers

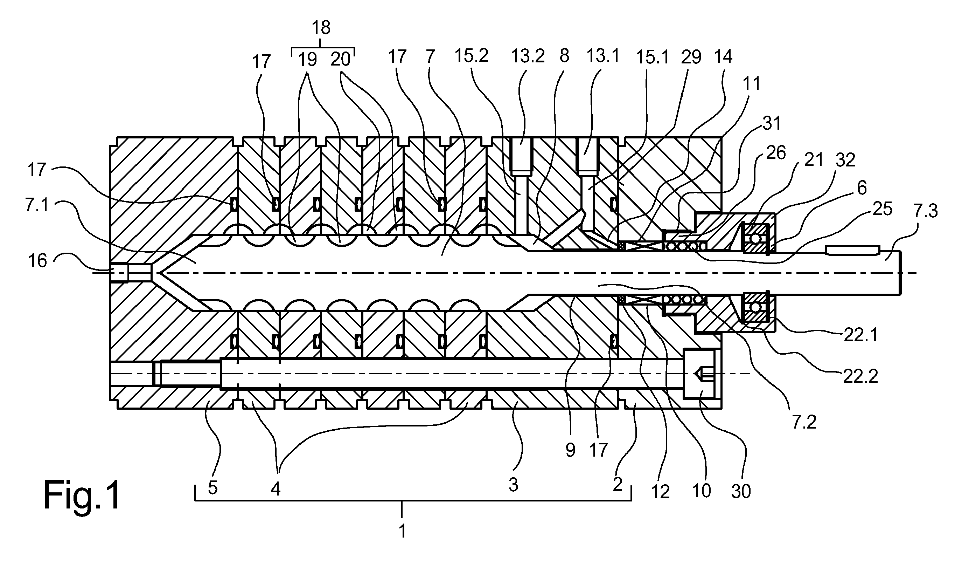

In Fig. 1 ist ein erstes Ausführungsbeispiel des dynamischen Mischers zum Vermengen von fließfähigen Medien schematisch in einer Querschnittansicht dargestellt. Der Mischer weist ein mehrteiliges Gehäuse 1 auf, das eine innere Mischkammer 8 und eine Mischwelle 7 umfasst. Das Gehäuse 1 ist zylinderisch ausgebildet und setzt sich aus einem Dichtungsgehäuse 2, einem Lagergehäuse 3, mehrere Gehäuseringe 4 und einem Auslassgehäuse 5 zusammen. Die Gehäuseteile 2, 3, 4 und 5 sind über mehrere Schrauben 30 miteinander druckdicht verbunden. Hierzu sind zwischen den Gehäuseteilen mehrere Dichtringe 17 angeordnet.

Die Mischkammer 8 erstreckt sich zwischen dem Lagergehäuse 3 und dem Auslassgehäuse 5, wobei die Gehäuseringe 4 den eigentlichen Mischraum der Mischkammer 8 bilden. So ist ein Einlassende der Mischkammer 8 innerhalb des Lagergehäuses 3 ausgebildet. Ein Auslassende der Mischkammer 8 wird durch das Auslassgehäuse 5 gebildet. An dem Auslassgehäuse 5 ist an der äußeren Stirnseite ein Auslass 16 angeordnet, der unmittelbar in die Mischkammer 8 mündet.

Dem Einlassende der Mischkammer 8 sind am Lagergehäuse 3 mehrere Einlässe 13.1 und 13.2 zugeordnet, die über jeweils einen Einlasskanal 15.1 und 15.2 mit der Mischkammer 8 verbunden sind.

Innerhalb der Mischkammer 8 ist eine Mischwelle drehend gehalten, die mit einem Mischabschnitt 7.1 in die Mischkammer 8 hineinragt. Dem Mischabschnitt 7.1 folgt ein Lagerabschnitt 7.2 und ein Antriebsabschnitt 7.3, so dass die Mischwelle 7 das Lagergehäuse 3 und das Dichtungsgehäuse 2 durchdringt, um mit einem freien Ende des Antriebsabschnittes 7.3 mit einem Antrieb beispielsweise einem Elektromotor gekoppelt zu werden.

Der Mischabschnitt 7.1 der Mischwelle 7 ist im Durchmesser der Mischkammer 8 angepasst, wobei der Mischabschnitt 7.1 der Mischwelle 7 am Umfang mehrere Mischnuten 19 aufweisen, die mit mehreren in den Gehäuseringen 4 ausgebildeten Gehäusenuten 20 ein Nutensystem 18 bilden. Die Gehäusenuten 20 sind hierzu in Teilbereichen am Innendurchmesser der Gehäuseringe 4 ausgebildet. Die Mischnuten 19 am Umfang des Mischabschnittes 7 sind demgegenüber an dem gesamten Umfang der Mischwelle verteilt ausgebildet und in radialer Richtung ausgerichtet. Bei dem in Fig. 1 dargestellten Ausführungsbeispiel wird das Nutensystem 18 in der Mischkammer 8 durch insgesamt sechs Gehäuseringe 4 gebildet. Die Anzahl der Gehäuseringe 4 sowie die Länge des Mischabschnittes 7.1 der Mischwelle 7 sind hierbei beliebig und hier nur beispielhaft dargestellt.

Auf der Einlassseite der Mischkammer 8 weist das Lagergehäuse 3 eine konzentrisch zur Mischkammer 8 ausgebildete Lagerbohrung 9 auf. Die Lagerbohrung 9 erstreckt sich bis zu einer Trennfuge 29, die zwischen dem Lagergehäuse 3 und dem Dichtungsgehäuse 2 gebildet ist. Innerhalb des Lagergehäuses 3 ist der Lagerabschnitt 7.2 der Mischwelle 7 gleitgelagert. Am Ende der Lagerbohrung 7.2 im Bereich der Trennfuge 29 ist ein Schmierkanal 14 ausgebildet, der die Lagerbohrung 9 mit dem Einlass 13.1 verbindet. Über den Schmierkanal 14 wird der Lagerbohrung 9 und somit dem Gleitlager der Mischwelle 7 ein über den Einlass 13.1 zulaufendes Medium zugeführt.

An der Trennfuge 29 schließt sich unmittelbar an dem Lagergehäuse 3 das Dichtungsgehäuse 2 an. Das Dichtungsgehäuse 2 weist eine Dichtungsbohrung 10 auf, die konzentrisch zur Lagerbohrung 9 ausgebildet ist und durch die Trennfuge 29 von der Lagerbohrung 9 getrennt ist. Die Dichtungsbohrung 10 in dem Dichtungsgehäuse 2 ist im Durchmesser größer ausgebildet als die Lagerbohrung 9 in dem Lagergehäuse 3. Die Mischwelle 7 durchdringt die Dichtungsbohrung 10 mit dem Antriebsabschnitt 7.3, der mit einem freien Ende aus dem Gehäuse 1 herausragt. Am Umfang des Antriebsabschnittes 7.3 der Mischwelle 7 ist innerhalb des Dichtungsgehäuses 2 ein Dichtungsmittel in Form einer Stopfbuchspackung 11 angeordnet. Der Stopfbuchspackung 11 ist auf der zum Lagergehäuse 3 gewandten Seite ein Stützring 12 zugeordnet, der an dem Lagergehäuse 3 anliegt. Auf der gegenüberliegenden Seite wirkt an der Stopfbuchspackung 11 eine Druckfeder 25, die über einen Schraubadapter 26 an dem Dichtungsgehäuse 2 gehalten ist. Der Schraubadapter 26 ist hierzu in ein am Ende der Dichtungsbohrung 10 ausgebildeten Innengewinde 31 im Dichtungsgehäuse 2 eingeschraubt. Die Druckfeder 25 ist zwischen einer Durchmesserstufe am Schraubadapter 26 und der Stopfbuchsenpackung 11 eingespannt. Die Stopfbuchsenpackung 11 wird durch die Druckfeder 25 mit einer Vorspannung an dem Stützring 12 gehalten.

Der Schraubadapter 26 ist an einem Adaptergehäuse 6 ausgebildet, das sich außerhalb des Dichtungsgehäuses 2 erstreckt und den Antriebsabschnitt 7.3 der Mischwelle 7 ummantelt. In dem Zwischenraum zwischen dem Antriebsabschnitt 7.3 und einer Gehäusewand 32 des Adaptergehäuses 6 ist ein Axiallager 21 angeordnet, das über mehrere Sicherungsringe 22.1 und 22.2 am Umfang der Mischwelle 7 und der Gehäusewand 32 fixiert ist. Der Antriebsabschnitt 7.3 der Mischwelle 7 weist hierzu bevorzugt einen Durchmesserabsatz auf, um eine axiale Fixierung der Mischwelle 7 innerhalb des Gehäuses 1 zu ermöglichen.

Bei dem in Fig. 1 dargestellten Ausführungsbeispiel des erfindungsgemäßen und dynamischen Mischers wird im Betrieb das freie Ende des Antriebsabschnittes 7.3 der Mischwelle 7 mit einem Antrieb verbunden, so dass die Mischwelle 7 innerhalb des Gehäuses 1 mit vorbestimmter Drehzahl antreibbar ist. Im Betrieb werden dem Mischer über die Einlässe 13.1 und 13.2 zwei unterschiedliche fließfähige Medien zugeführt, die über die Einlasskanäle 15.1 und 15.2 in die Mischkammer eingespeist werden. Innerhalb der Mischkammer, die zylindrisch ausgebildet ist, wird durch Drehung der Mischwelle 7 eine Vermengung der beiden Medien erzeugt. Hierbei wird durch das Nutensystem 18 eine intensive Umverteilung der äußeren und inneren Schichten erreicht. Am Ende der Mischkammer 8 wird das Gemisch aus beiden Medien abgeführt.

Die Mischwelle 7 ist im Betrieb unmittelbar durch den Lagerabschnitt 7.2 in der Lagerbohrung 9 des Lagergehäuses 3 gleitgelagert. Um ein Trockenlaufen zu vermeiden, wird über den Schmierkanal 24 kontinuierlich das in dem Einlass 13.1 einströmende Medium mit einem Teilstrom der Lagerbohrung 9 zugeführt. Hierbei wird durch die angrenzende Dichtungsbohrung 10 an dem Dichtungsgehäuse 2 sowie die darin enthaltenen Dichtungsmittel 11 und 12 gewährleistet, dass der Teilstrom ausschließlich in den Lagerspalt der Lagerbohrung 9 eindringen kann. Innerhalb der Lagerbohrung 9 bildet sich in einem zwischen der Mischwelle 7 und der Lagerbohrung 9 gebildeten Lagerspalt ein Schmierstrom aus, der zur Mischkammer 8 gerichtet ist. Damit lässt sich der Mischer selbst nach einem Mediumwechsel direkt wieder einsetzen. Bereits nach kurzer Zeit können die sich noch in den Lagerspalten befindlichen Reste ausgespült werden. Im Übergangsbereich zwischen dem Lagergehäuse und dem Dichtungsgehäuse sind keine Toträume vorhanden, in denen sich ungewünschte Restmengen von älteren Medien ansammeln könnten. Daher ist der dynamische Mischer gemäß dem Ausführungsbeispiel nach Fig. 1 besonders geeignet, um in einem System flüssige Farben zu vermengen, die öfteren Farbwechseln unterliegen.

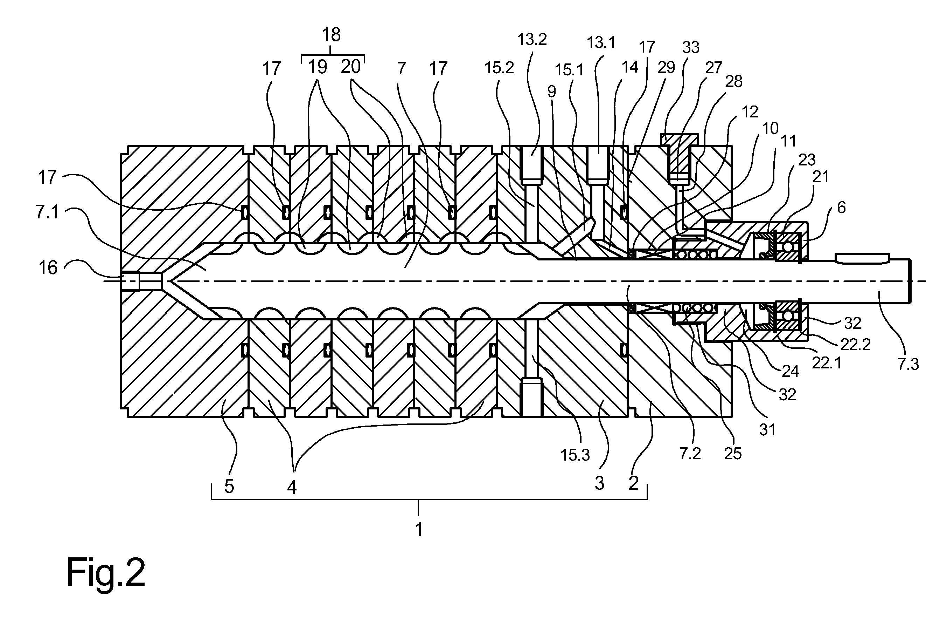

In Fig. 2 ist ein weiteres Ausführungsbeispiel des erfindungsgemäßen dynamischen Mischers schematisch in einer Querschnittansicht dargestellt. Das Ausführungsbeispiel ist im Wesentlichen identisch zu dem vorgenannten Ausführungsbeispiel nach Fig. 1, so dass an dieser Stelle nur die Unterscheide erläutert werden und ansonsten Bezug zu der vorgenannten Beschreibung genommen wird.

Das im wesentlichen zylindrisch ausgebildete Gehäuse 1 ist auf diesem Ausführungsbeispiel mehrteilige aus einem Dichtungsgehäuse 2, einem Lagergehäuse 3, mehreren Gehäuseringen 4 und einem Auslassgehäuse 5 gebildet. Die im Innern der Gehäuseteile 2, 3, 4 und 5 ausgebildete Mischkammer und gehaltene Mischwelle 7 sind identisch zu dem vorgenannten Ausführungsbeispiel ausgeführt.

Bei dem in Fig. 2 dargestellten Ausführungsbeispiel ist der Mischkammer 8 an dem Einlaufende insgesamt drei Einlasskanäle 15.1 bis 15.3 zugeordnet, die mit drei am Umfang des Lagergehäuses 3 ausgebildeten Einlässen 13.1 bis 13.3 verbunden sind. Hierbei mündet in dem Einlasskanal 15.1 ein Schmierkanal 14, der die Lagerbohrung 9 mit dem Einlass 13.1 verbindet.

Die Mischwelle 7 ist ebenfalls identisch zu dem vorgenannten Ausführungsbeispiel ausgeführt und ist über den Lagerabschnitt 7.2 in dem Lagergehäuse 3 gelagert und mit dem Antriebsabschnitt 7.3 in dem Dichtungsgehäuse 2 gegenüber der Umgebung abgedichtet.

Um eine absolute Dichtheit an der nach außen ragenden Mischwelle zu erhalten, ist bei dem in Fig. 2 dargestellten Ausführungsbeispiel innerhalb des Adaptergehäuses 6 ein Wellendichtring 23 dem Axiallager 21 auf der Innenseite zugeordnet. Zwischen dem Wellendichtring 23 und dem sich an dem Lagergehäuse 3 abstützenden Dichtungsmittel ist zwischen der Mischwelle 7 und dem Adaptergehäuse 6 eine Ringkammer 24 ausgebildet. Die Ringkammer 24 ist über mehrere Füllkanäle 28 mit einem am Umfang des Dichtungsgehäuses 2 ausgebildeten Fülleinlass 27 gekoppelt. Der Fülleinlass 27 ist über einen Stopfen 33 verschlossen. Zuvor wurde über den Fülleinlass 27 ein Sperrmedium in die Ringkammer 24 eingeleitet. Die Sperrflüssigkeit füllt hierbei den gesamten Freiraum zwischen der Stopfbuchsenpackung 11 und dem Wellendichtring 23 aus. Insoweit lässt sich eine hohe Dichtheit an der Mischwelle 7 erzeugen. Als Sperrmedium wird vorzugsweise ein Lösungsmittel verwendet, das mögliche Leckagen des im Mischer behandelten Mediums auflöst.

Die Funktion des in Fig. 2 dargestellten Ausführungsbeispiels ist identisch mit der Funktion des Ausführungsbeispiels nach Fig. 1, so dass an dieser Stelle keine weitere Erläuterung erfolgt.

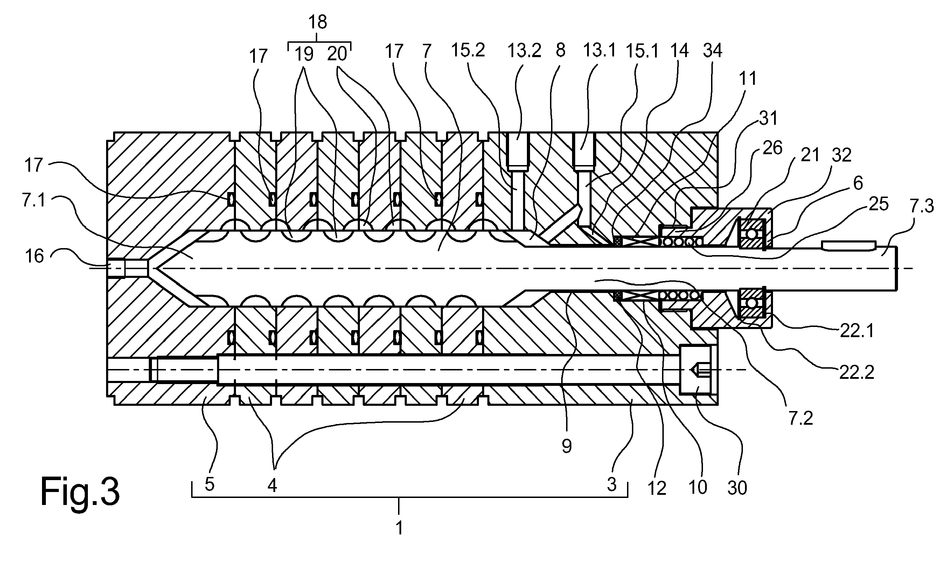

In Fig. 3 ist ein weiteres Ausführungsbeispiel des dynamischen Mischers zum Vermengen von fließfähigen Medien schematisch in einer Querschnittansicht dargestellt. Das Ausführungsbeispiel ist in seiner Funktion und in seinem Aufbau identisch mit dem Ausführungsbeispiel nach Fig. 1 und unterscheidet sich nur in der Ausbildung der zylindrischen Gehäuses 1. Insoweit werden nachfolgend nur die Unterschiede zu dem vorgenannten Ausführungsbeispiel erläutert und ansonsten Bezug zu der vorgenannten Beschreibung genommen.

Bei dem in Fig. 3 dargestellten Ausführungsbeispiel ist das zylindrische Gehäuse 1 aus einem Lagergehäuse 3, mehreren Gehäuseringen 4 und einem Auslassgehäuse 5 gebildet. Die Gehäuseteile 3, 4 und 5 sind über mehrere Schrauben 30 miteinander druckdicht verbunden. Hierzu sind zwischen den Gehäuseteilen 3, 4 und 5 mehrere Dichtringe 17 angeordnet.

Zur Aufnahme einer Mischwelle 7 weist das Lagergehäuse 3 eine konzentrisch zu einer Mischkammer 8 ausgebildete Lagerbohrung 9 auf. Die Lagerbohrung 9 mündet in eine Dichtungsbohrung 10, die konzentrisch zu der Lagerbohrung 9 ausgebildet ist und einen größeren Außendurchmesser gegenüber der Lagerbohrung 9 aufweist. Zwischen der Lagerbohrung 9 und der Dichtungsbohrung 10 ist somit ein Absatz 34 in dem Lagergehäuse 3 ausgebildet.

Die Dichtungsbohrung 10 erstreckt sich bis zu einem Innengewinde 31, in welchem ein Schraubadapter 26 an dem Lagergehäuse 3 gehalten ist.

Bei dem in Fig. 3 dargestellten Ausführungsbeispiel ist das Dichtungsmittel innerhalb der Dichtungsbohrung 9 ebenfalls durch eine Stopfbuchspackung 11 gebildet, die durch eine Federbelastung an einem Stützring 12 gehalten ist. Der Stützring 12 ist am Ende der Dichtungsbohrung 10 angeordnet und stützt sich an dem Absatz 34 gegenüber der Lagerbohrung 9 ab. Die der Stopfbuchspackung 11 zugeordnete Druckfeder 25 wird hierbei ebenfalls über den Schraubadapter 26 am Umfang der Mischwelle 7 und in dem Lagergehäuse 3 gehalten. Außerhalb des Lagergehäuses 3 trägt der Schaubadapter 26 ein als Wälzlager ausgebildetes Axiallager 21 am Umfang der Mischwelle 7, durch welche die Mischwelle 7 innerhalb des Gehäuses 1 und insbesondere innerhalb der Mischkammer 8 fixiert gehalten ist.

Die Verlagerung des Axiallagers außerhalb des Lagergehäuses 3 begünstigt somit die Optimierung der inneren Toträume am Umfang der Mischwelle im Bereich des Gleitlagers.

Bei den in Fig. 1 bis 3 dargestellten Ausführungsbeispielen wurde als Dichtungsmittel eine Stopfbuchspackung verwendet, die im federvorgespannten Zustand eine hohe Dichtheit und lange Standzeiten gewährt. Grundsätzlich besteht jedoch auch die Möglichkeit, andere Dichtungsmittel wie beispielsweise Wellendichtringe zu verwenden.

Der erfindungsgemäße dynamische Mischer zeichnet sich somit durch sehr geringe Toträume innerhalb des Gehäuses aus, in denen sich ein fließfähiges Medium im Betrieb ansammeln kann. Damit ist der dynamische Mischer besonders geeignet, um im Betrieb flexibel zum Vermengen unterschiedlicher Medien eingesetzt zu werden. So lässt sich beispielsweise bei der Vermengung von Farben ein Farbwechsel und ein Durchspülen des Mischers in sehr kurzen Betriebszeiten realisieren.

### Bezugszeichenliste:

- 1: Gehäuse
- 2: Dichtungsgehäuse
- 3: Lagergehäuse
- 4: Gehäuseringe
- 5: Auslassgehäuse
- 6: Adaptergehäuse
- 7: Mischwelle
- 7.1: Mischabschnitt
- 7.2: Lagerabschnitt
- 7.3: Antriebsabschnitt
- 8: Mischkammer
- 9: Lagerbohrung
- 10: Dichtungsbohrung
- 11: Stopfbuchspackung
- 12: Stützring
- 13.1, 13.2, 13.3: Einlass
- 14: Schmierkanal
- 15.1, 15.2: Einlasskanal
- 16: Auslass
- 17: Dichtring
- 18: Nutensystem
- 19: Mischnuten
- 20: Gehäusenuten
- 21: Axiallager
- 22.1, 22.2: Sicherungsring
- 23: Wellendichtung
- 24: Ringkammer
- 25: Druckfeder
- 26: Schraubadapter
- 27: Fülleinlass
- 28: Füllkanal
- 29: Trennfuge
- 30: Schraube
- 31: Innengewinde
- 32: Gehäusewand
- 33: Stopfen
- 34: Absatz

## Patentansprüche

1. Dynamischer Mischer zum Vermengen von fließfähigen Medien mit einer Mischkammer (8) in einem mehrteiligen Gehäuse (1), mit mehreren Einlässen (13.1, 13.2) und einem Auslass (16), die mit der Mischkammer (8) verbunden sind, und mit einer Mischwelle (7), die mit einem Mischabschnitt (7.1) in die Mischkammer (8) ragt, die mit einem Lagerabschnitt (7.2) im Gehäuse (1) gleitgelagert ist und die mit einem Antriebsabschnitt (7.3) zur Ankupplung eines Antriebes das Gehäuse (1) nach außen durchdringt,
wobei
das Gehäuse (1) zur Aufnahme des Antriebsabschnittes (7.3) der Mischwelle (7) eine Dichtungsbohrung (10) und zur Lagerung des Lagerabschnittes (7.2) der Mischwelle (7) eine Lagerbohrung (9) aufweist und, wobei die Dichtungsbohrung (10) zur Aufnahme eines Dichtungsmittels (11) im Durchmesser größer ausgebildet ist als die Lagerbohrung (9),
**dadurch gekennzeichnet, dass**
der Lagerbohrung (9) ein Schmierkanal (14) zugeordnet ist, der in die Lagerbohrung (9) mündet und mit einem der Einlässe (13.1) verbunden ist.

2. Dynamischer Mischer nach Anspruch 1,
**dadurch gekennzeichnet, dass**
die Dichtungsbohrung (10) und die Lagerbohrung (9) durch eine Trennfuge (29) im Gehäuse (1) getrennt sind.

3. Dynamischer Mischer nach Anspruch 2,
**dadurch gekennzeichnet, dass**
die Lagerbohrung (9) in einem separaten Lagergehäuse (3) und die Dichtungsbohrung (10) in einem separaten Dichtungsgehäuse (2) ausgebildet sind, wobei die Gehäuseteile (2, 3) über die Trennfuge (29) druckdicht miteinander verbunden sind.

4. Dynamischer Mischer nach einem der Ansprüche 1 bis 3,
**dadurch gekennzeichnet, dass**
dem Dichtungsmittel (11) am Umfang der Mischwelle (7) ein Stützring (12) zugeordnet ist, durch welchen sich das Dichtungsmittel (11) gegenüber der Lagerbohrung (9) abstützt.

5. Dynamischer Mischer nach Anspruch 4,
**dadurch gekennzeichnet, dass**
das Dichtungsmittel durch eine Stopfbuchspackung (11) gebildet ist, dass eine Druckfeder (25) der Stopfbuchspackung (11) zugeordnet ist und dass die Stopfbuchspackung (11) durch die Druckfeder (25) belastet an dem Stützring (12) gehalten ist.

6. Dynamischer Mischer nach einem der Ansprüche 1 bis 5,
**dadurch gekennzeichnet, dass**
der Antriebsabschnitt (7.3) der Mischwelle (7) außerhalb der Dichtungsbohrung (10) ein Axiallager (21) zugeordnet ist, dass durch ein mit dem Dichtgehäuse (2) verbundenes Adaptergehäuse (6) gehalten ist.

7. Dynamischer Mischer nach Anspruch 6,
**dadurch gekennzeichnet, dass**
am Umfang des Antriebsabschnittes (7.3) der Mischwelle (7) zwischen dem Axiallager (21) und dem Dichtungsmittel (11) ein Wellendichtring (23) und eine Ringkammer (24) ausgebildet ist, wobei die Ringkammer (24) mit einem Sperrmedium füllbar ist.

8. Dynamischer Mischer nach einem der vorgenannten Ansprüche ,
**dadurch gekennzeichnet, dass**
die Mischkammer (8) durch mehrere Gehäuseringe (4) gebildet sind, die druckdicht in dem Gehäuse (1) gehalten sind und die gemeinsam mit dem Mischabschnitt (7.1) der Mischwelle (7) ein Nutensystem (18) innerhalb der Mischkammer (8) bilden.

9. Dynamischer Mischer nach Anspruch 8,
**dadurch gekennzeichnet, dass**
die Gehäuseringe (4) zwischen einem Auslassgehäuse (5) und dem Lagergehäuse (3) angeordnet sind, wobei die Mischkammer (8) sich vom Lagergehäuse (3) bis hin zum Auslassgehäuse (5) erstreckt.

10. Dynamischer Mischer nach Anspruch 9,
**dadurch gekennzeichnet, dass**
der Auslass (16) am Auslassgehäuse (5) und die Einlässe (13.1, 13.2) am Lagergehäuse (2) ausgebildet sind.

## Claims

1. A dynamic mixer for the mixing of flowable media, having a mixing chamber (8) in a multipart housing (1), having numerous inlets (13.1, 13.2) and an outlet (16), which are connected to the mixing chamber (8), and having a mixing shaft (7), which extends with a mixing section (7.1) into the mixing chamber (8), which is supported in a sliding bearing in the housing (1) with a bearing section (7.2), and which extends outward from the housing (1) with a drive section (7.3), for coupling to a drive, wherein the housing (1) includes a sealing hole (10) for accommodating the drive section (7.3) of the mixing shaft (7), and a bearing hole (9) for supporting the bearing section (7.2) of the mixing shaft (7), and wherein the sealing hole (10) is designed such that it has a greater diameter than the bearing hole (9), for the purpose of accommodating a sealing means (11),
**characterized in that** a lubrication channel (14) is associated with the bearing hole (9), which opens into the bearing hole (9) and is connected to one of the inlets (13.1).

2. The dynamic mixer according to Claim 1, **characterized in that** the sealing hole (10) and the bearing hole (9) are separated by an interstice (29) in the housing (1).

3. The dynamic mixer according to Claim 2, **characterized in that** the bearing hole (9) is formed in a separate bearing housing (3) and the sealing hole is formed in a separate sealing housing (2), wherein the housing parts (2, 3) are connected to one another in a pressure-sealed manner via an interstice (29).

4. The dynamic mixer according to one of the Claims 1 - 3, **characterized in that** a support ring (12) on the circumference of the mixing shaft (7) is associated with the sealing means (11), by means of which the sealing means (11) is supported with respect to the bearing hole (9).

5. The dynamic mixer according to Claim 4, **characterized in that** the sealing means is formed by means of a packing gland (11), that a pressure spring (25) is associated with the packing gland (11), and that the packing gland (11) is retained on the supporting ring (12) by means of pressure exerted by the pressure spring (25).

6. The dynamic mixer according to one of the Claims 1 - 5, **characterized in that** an axial bearing (21) is associated with the drive section (7.3) of the mixing shaft (7) outside of the sealing hole (10), which is retained by means of an adapter housing (6) connected to the sealing housing (2).

7. The dynamic mixer according to Claim 6, **characterized in that** a shaft seal ring (23) and a ring chamber (24) are formed on the circumference of the drive section (7.3) of the mixing shaft (7), between the axial bearing (21) and the sealing means (11), wherein the ring chamber (24) can be filled with a sealing medium.

8. The dynamic mixer according to one of the preceding Claims, **characterized in that** the mixing chamber (8) is formed by numerous housing rings (4), which are retained in a pressure-sealed manner in the housing (1), and which form a groove system (18) within the mixing chamber (8) in conjunction with the mixing section (7.1) of the mixing shaft (7).

9. The dynamic mixer according to Claim 8, **characterized in that** the housing rings (4) are disposed between an outlet housing (5) and the bearing housing (3), wherein the mixing chamber (8) extends from the bearing housing (3) to the outlet housing (5).

10. The dynamic mixer according to Claim 9, **characterized in that** the outlet (16) is formed on the outlet housing (5) and the inlets (13.1, 13.2) are formed on the bearing housing (2).

## Revendications

1. Mélangeur dynamique pour mélanger des milieux coulants, avec une chambre de mélange (8) dans un boîtier en plusieurs parties (1), avec plusieurs entrées (13.1, 13.2) et une sortie (16) qui sont connectées à la chambre de mélange (8), et avec un arbre de mélange (7) qui pénètre dans la chambre de mélange (8) par une section de mélange (7.1), qui est supporté par un palier lisse dans le boîtier (1) par une section de palier (7.2) et qui traverse le boîtier (1) vers l'extérieur avec une section d'entraînement (7.3) pour le raccordement d'un entraînement,
le boîtier (1), pour recevoir la section d'entraînement (7.3) de l'arbre de mélange (7), présentant un alésage d'étanchéité (10) et, pour supporter la section de palier (7.2) de l'arbre de mélange (7), présentant un alésage de palier (9), et l'alésage d'étanchéité (10) pour recevoir un moyen d'étanchéité (11) étant réalisé avec un diamètre supérieur à celui de l'alésage de palier (9),
**caractérisé en ce que**
l'alésage de palier (9) est associé à un canal de lubrification (14) qui débouche dans l'alésage de palier (9) et qui est connecté à l'une des entrées (13.1).

2. Mélangeur dynamique selon la revendication 1,
**caractérisé en ce que**
l'alésage d'étanchéité (10) et l'alésage de palier (9) sont séparés par un joint de séparation (29) dans le boîtier (1).

3. Mélangeur dynamique selon la revendication 2,
**caractérisé en ce que**
l'alésage de palier (9) est réalisé dans un boîtier de palier séparé (3) et l'alésage d'étanchéité (10) est réalisé dans un boîtier d'étanchéité séparé (2), les parties de boîtier (2, 3) étant connectées l'une à l'autre de manière étanche à la pression par le biais du joint de séparation (29).

4. Mélangeur dynamique selon l'une quelconque des revendications 1 à 3,
**caractérisé en ce**
**qu'**une bague de support (12) est associée au moyen d'étanchéité (11) à la périphérie de l'arbre de mélange (7), le moyen d'étanchéité (11) s'appuyant par le biais de ladite bague de support contre l'alésage de palier (9).

5. Mélangeur dynamique selon la revendication 4,
**caractérisé en ce que**
le moyen d'étanchéité est formé par un joint presse-garniture (11), **en ce qu'**un ressort de compression (25) est associé au joint presse-garniture (11) et **en ce que** le joint presse-garniture (11), sollicité par le ressort de compression (25), est maintenu contre la bague de support (12).

6. Mélangeur dynamique selon l'une quelconque des revendications 1 à 5,
**caractérisé en ce que**
la section d'entraînement (7.3) de l'arbre de mélange (7) à l'extérieur de l'alésage d'étanchéité (10) est associée à un palier axial (21), qui est maintenu par un boîtier d'adaptateur (6) connecté au boîtier d'étanchéité (2).

7. Mélangeur dynamique selon la revendication 6,
**caractérisé en ce**
**qu'**à la périphérie de la section d'entraînement (7.3) de l'arbre de mélange (7) entre le palier axial (21) et le moyen d'étanchéité (11) sont réalisées une bague d'étanchéité d'arbre (23) et une chambre annulaire (24), la chambre annulaire (24) pouvant être remplie d'un milieu barrière.

8. Mélangeur dynamique selon l'une quelconque des revendications précédentes,
**caractérisé en ce que**
la chambre de mélange (8) est formée par plusieurs bagues de boîtier (4) qui sont retenues de manière étanche à la pression dans le boîtier (1), et qui forment conjointement avec la section de mélange (7.1) de l'arbre de mélange (7) un système de rainures (18) à l'intérieur de la chambre de mélange (8).

9. Mélangeur dynamique selon la revendication 8,
**caractérisé en ce que**
les bagues de boîtier (4) sont disposées entre un boîtier de sortie (5) et le boîtier de palier (3), la chambre de mélange (8) s'étendant depuis le boîtier de palier (3) jusqu'au boîtier de sortie (5).

10. Mélangeur dynamique selon la revendication 9,
**caractérisé en ce que**
la sortie (16) est réalisée au niveau du boîtier de sortie (5) et les entrées (13.1, 13.2) sont réalisées au niveau du boîtier de palier (2).
